**Europäisches Patentamt**

**European Patent Office**

**Office européen des brevets**

(19)

(11) Veröffentlichungsnummer : **0 332 907 B1**

(12)

# EUROPÄISCHE PATENTSCHRIFT

(45) Veröffentlichungstag der Patentschrift :
**13.05.92 Patentblatt 92/20**

(51) Int. Cl.⁵ : **C02F 3/10**

(21) Anmeldenummer : **89103349.0**

(22) Anmeldetag : **25.02.89**

(54) **Füllmaterial zur Behandlung von Flüssigkeiten sowie Verfahren zur Herstellung desselben.**

(30) Priorität : **09.03.88 DE 3807695**

(43) Veröffentlichungstag der Anmeldung :
**20.09.89 Patentblatt 89/38**

(45) Bekanntmachung des Hinweises auf die
Patenterteilung :
**13.05.92 Patentblatt 92/20**

(84) Benannte Vertragsstaaten :
**AT BE CH DE ES FR GB IT LI LU NL SE**

(56) Entgegenhaltungen :
**EP-A- 0 056 083**
**EP-A- 0 274 633**
**US-A- 4 422 930**

(73) Patentinhaber : **Norddeutsche Seekabelwerke Aktiengesellschaft**
**Kabelstrasse**
**W-2890 Nordenham (DE)**

(72) Erfinder : **Basse, Hartwig**
**Wartfelder Strasse 60**
**W-2890 Nordenham (DE)**
Erfinder : **Wittek, Jürgen, Dr.**
**Im Sonnenwinkel 3**
**W-2890 Nordenham (DE)**

(74) Vertreter : **Möller, Friedrich, Dipl.-Ing. et al**
**Meissner, Bolte & Partner Patentanwälte**
**Hollerallee 73**
**W-2800 Bremen 1 (DE)**

EP 0 332 907 B1

## Beschreibung

Die Erfindung betrifft ein Füllmaterial aus Kunststoff zur Behandlung von Flüssigkeiten gemäß dem Oberbegriff des Anspruchs 1. Weiterhin betrifft die Erfindung ein Verfahren zur Herstellung von zur biologischen Abwasserbehandlung dienendem Füllmaterial gemäß dem Oberbegriff des Anspruchs 9.

Das hier angesprochene Füllmaterial wird vor allem zur biologischen Behandlung in der Abwassertechnik verwendet. Hierbei dient das Füllmaterial als Träger für die zur biologischen Behandlung erforderlichen Bakterien, nämlich eines sogenannten biologischen Rasens. Die Leistungsfähigkeit einer mit derartigem Füllmaterial bestückten Anlage zur Abwasserbehandlung hängt von mehreren Faktoren ab. Einerseits soll das Füllmaterial eine möglichst große spezifische Bewuchsfläche bieten, während andererseits ein möglichst guter Halt der Bakterien auf dem Füllmaterial erforderlich ist. Schließlich soll der biologische Rasen auf dem Füllmaterial ungehindert von der zu behandelnden Flüssigkeit umströmt bzw. benetzt werden können.

Es ist Füllmaterial der gattungsbildenden Art bekannt, das aus einer Vielzahl glatter Kunststoff-Streifen besteht. Diese haben den Nachteil, daß sie zur Verklebung neigen, wodurch zwischen dem biologischen Rasen benachbarter Streifen die zu behandelnde Flüssigkeit nicht mehr hindurchströmen kann. Die Wirksamkeit einer mit solchem Füllmaterial versehenen Abwasserbehandlungs-Anlage wird dadurch erheblich reduziert.

Zur Vermeidung der vorstehend genannten Nachteile geht aus der älteren europäischen Patentanmeldung 274 633 ein Füllmaterial hervor, dessen Streifen an gegenüberliegenden Randbereichen mit Aufwölbungen versehen sind. In der Mitte verfügen die Streifen über einen glatten Verlauf. Dadurch wird ein neutraler Bereich in der Mitte der Streifen geschaffen, der zur Aufnahme des Eigengewichts der benetzen Streifen dient. Dabei hat sich jedoch gezeigt, daß durch die Gewichtsbelastung der Streifen infolge des darauf sich absetzenden biologischen Rasens mit der Zeit die Streifen glattgezogen werden mit der Folge, daß auch diese allmählich zusammenkleben.

Des weiteren hat es sich als aufwendig erwiesen, aus dem bekannten streifenförmigen Füllmaterial Tropfkörper zu bilden, weil die Aufhängung der Streifen auf eine entsprechende Trageinrichtung nur schwierig in einer für die optimale Wirkungsweise erforderlichen gleichmäßigen Verteilung auf den gesamten Tropfkörper durchführbar ist.

Hiervon ausgehend liegt der Erfindung die Aufgabe zugrunde, ein wirksames und leicht montierbares streifenförmiges Füllmaterial sowie ein Verfahren zur einfachen Herstellung desselben zu schaffen.

Zur Lösung dieser Aufgabe weist das erfindungsgemäße Füllmaterial die Merkmale des Anspruchs 1 auf. Durch die Anordnung wenigstens eines zugaufnehmenden Strangs auf den Streifen wird erreicht, daß diese Streifen sich unter der Belastung des darauf angesiedelten biologischen Rasens nicht dehnen und sich demzufolge nicht glätten können mit der Folge eines leichten Aneinanderklebens benachbarter Streifen. Im Gegenteil: Es hat sich überraschend gezeigt, daß die mit wenigstens einem Strang versehenen Streifen sich unter Lasteinwirkung verwinden. Ein Verkleben benachbarter Streifen ist dann praktisch nicht mehr möglich.

Zweckmäßigerweise sind die zugaufnehmenden (runden) Stränge so auf die Streifen aufgebracht, daß sie in Längsrichtung derselben verlaufen. Auf diese Weise lassen sich die Stränge leicht herstellen und beeinträchtigen den Bewuchs so gut wie gar nicht.

Als besonders vorteilhaft hat es sich erwiesen, jedem Streifen einen einzigen (mittigen) Strang zuzuordnen. Die so verstärkten Streifen wendeln sich bei Belastung um den Strang herum, der so etwa eine Längsmittelachse einer Spirale bildet.

Nach einem weiteren wesentlichen Vorschlag der Erfindung sind die jeweiligen Stränge mit den dazugehörenden Streifen derart verbunden, daß bei gestreckten (geradlinigen) Strängen die damit verbundenen Streifen zumindest in den Bereichen ihrer gegenüberliegenden Ränder gekräuselt bzw. wellenförmig verlaufen. Dabei wird durch die zugaufnehmenden Stränge gewährleistet, daß auch bei belasteten Streifen diese Gestalt der Streifen beibehalten wird, da die Stränge eine Dehnung und somit ein Glattziehen der Streifen verhindern.

Das erfindungsgemäße Verfahren weist die Merkmale des Anspruchs 9 auf. Demnach werden die zur Stabilisierung der Streifen dienenden Stränge zunächst separat hergestellt und dann mit den Streifen verbunden. Die Stränge befinden sich dabei im Gegensatz zu den Streifen noch im mindestens warmen Zustand. Hierdurch wird zum einen erreicht, daß ohne Kleben oder sonstigen Nachbehandlungsmaßnahmen die noch warmen bzw. heißen Stränge mit den Streifen verkleben bzw. verschweißen. Zum anderen werden beim Abkühlen der Kunststoff-Stränge und die damit einhergehende Schrumpfung derselben die kalten, also nicht mehr schrumpfenden Streifen, gekräuselt. Diese zur Erhöhung der spezifischen Bewuchsfläche dienende Kräuselung entsteht somit beim erfindungsgemäßen Verfahren ohne zusätzliche Maßnahmen quasi "nebenbei".

Weiter wird verfahrensmäßig vorgeschlagen, mehrere Stränge gleichzeitig auf eine zur Bildung einer größeren Anzahl nebeneinanderliegender Streifen dienende Bahn aufzusiegeln und nach dem Abkühlen der Stränge durch fortlaufende Trennschnitte zwischen zwei benachbarten Strängen die Bahn zur Bildung nebeneinanderliegender Streifen zu zerteilen. Dieses Verfahren ermöglicht eine hohe Festigungskapazität, da gleich-

2

zeitig mehrere nebeneinanderliegende Streifen hergestellt werden können.

Weiterhin wird vorgeschlagen, die zur Verbindung nebeneinanderliegender Streifen dienende Haltebahn dadurch zu bilden, daß die Trennschnitte zur Bildung nebeneinanderliegender Streifen aus der Bahn in regelmäßigen Abständen ausgesetzt werden. Die Haltestreifen werden somit in einfachster Weise dadurch gebildet, daß in ihren Bereichen die zur Bildung der Streifen dienende Bahn unverändert bleibt. Hierdurch wird somit eine wesentliche Vereinfachung der Herstellung des erfindungsgemäßen Füllmaterials herbeigeführt.

Schließlich wird noch Verfahrensmäßig vorgeschlagen, zur Schaffung einer größeren für sich handhabbaren Einheit mit einer relativ großen Anzahl unabhängiger Streifen mehrere Bahnen zusammenzufassen. Dazu werden mehrere Bahnen zusammengeführt und nach dem Einschneiden der einzelnen Streifen an ihren Haltestreifen verbunden, vorzugsweise durch Schweißen. So läßt sich eine erhebliche Anzahl von Streifen zusammenfassen und als Ganzes auf einem Traggerüst od. dgl. des Tropfkörpers montieren.

Ausführungsbeispiele des erfindungsgemäßen Füllmaterials und Vorrichtungen zur Herstellung desselben werden nachfolgend anhand der Zeichnung näher erläutert. In dieser zeigen:

Fig. 1 einen Ausschnitt aus einem Tropfkörper mit über ein Traggerüst gehängtes Füllmaterial,

Fig. 2 eine Draufsicht auf das Füllmaterial gemäß der Fig. 1,

Fig. 3 eine vergrößert dargestellte, flächige Ansicht eines Abschnitts aus einem einzigen Streifens des Füllmaterials,

Fig. 4 einen Querschnitt durch den Streifen gemäß der Fig. 3,

Fig. 5 eine Seitenansicht des Streifens gemäß der der Fig. 3,

Fig. 6 eine Draufsicht auf ein weiteres Ausführungsbeispiel des Füllmaterials,

Fig. 7 eine vergrößert dargestellte, flächige Ansicht eines Abschnitts eines Streifens des Füllmaterials der Fig. 6,

Fig. 8 eine Seitenansicht des Streifens gemäß der Fig. 7,

Fig. 9 eine Vorrichtung zur Aufbringung von Strängen auf einer zur Bildung einer Mehrzahl von Streifen dienenden (Material-)Bahn,

Fig. 10 eine Vorrichtung zum Ausschneiden der Streifen aus der (Material-)Bahn und zum Zusammenführen mehrerer übereinanderliegender Bahnen, und

Fig. 11 ein alternatives Ausführungsbeispiel der Vorrichtung gemäß der Fig. 10 zur Herstellung von Streifen nach dem Ausführungsbeispiel der Fig. 6 bis 8.

Das in den Ausführungsbeispielen gezeigte Füllmaterial dient als Tropfkörper zur biologischen Abwasserbehandlung.

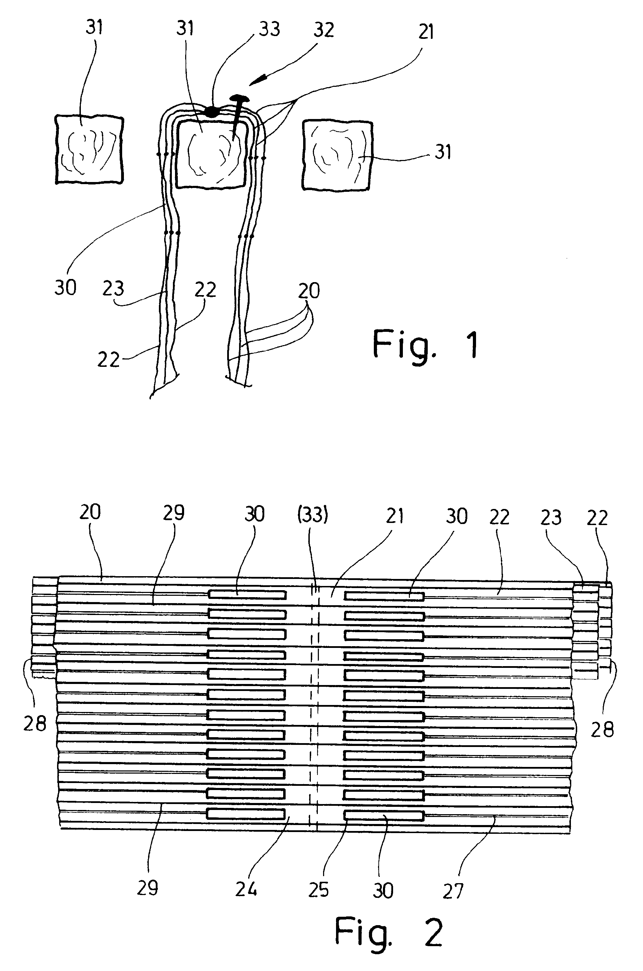

Die Fig. 1 bis 8 zeigen Ausführungsformen des Füllmaterials, bei denen eine Vielzahl von nebeneinanderliegenden, länglichen Streifen 20 durch eine mittige, querverlaufende Haltebahn 21 miteinander verbunden sind. Die einzelnen Streifen 20 des Füllmaterials sind hier in drei übereinanderliegenden Lagen 22 bzw. 23 angeordnet. Wie die Fig. 2 zeigt, verfügen die beiden äußeren Lagen 22 über eine gleiche Anzahl von Streifen 20. Auch die Anordnung der in den äußeren Lagen 22 sich befindenen Streifen ist etwa gleich. Hingegen verfügt die mittlere Lage 23 über eine um einen Streifen 20 reduzierte Anzahl von Streifen 20. Dadurch lassen sich die Streifen 20 der mittleren Lage 23 versetzt zu denjenigen der beiden äußeren Lagen 22 anordnen, derart, daß die Streifen der mittleren Lage 23 mittig zwischen zwei Streifen 20 der äußeren Lagen 22 liegen, also auf "Lücke". Die Länge der Streifen 20 ist etwa in jeder Lage 22 bzw. 23 gleich.

Wie der Fig. 2 zu entnehmen ist, sind die an gegenüberliegenden Endbereichen 24 und 25 der Haltebahn sich befindlichen Streifen 20 einstückig mit der Haltebahn verbunden. Dazu ist die Haltebahn 21 mit den ihr zugeordneten Streifen 20 aus einer gemeinsamen (Material-)Bahn 26 gebildet, die in den an die Haltebahn 21 angrenzenden Bereichen mit durchgehenden Einschnitten 27 zur Bildung der Streifen 20 versehen ist. Demnach sind die nebeneinanderliegenden Streifen 20 durch jeweils einen Einschnitt 27, der durchgehend von den freien Enden 28 der Streifen 20 bis zu dem jeweiligen Endbereich 24 bis 25 der Haltebahn 21 verläuft, voneinander abgetrennt.

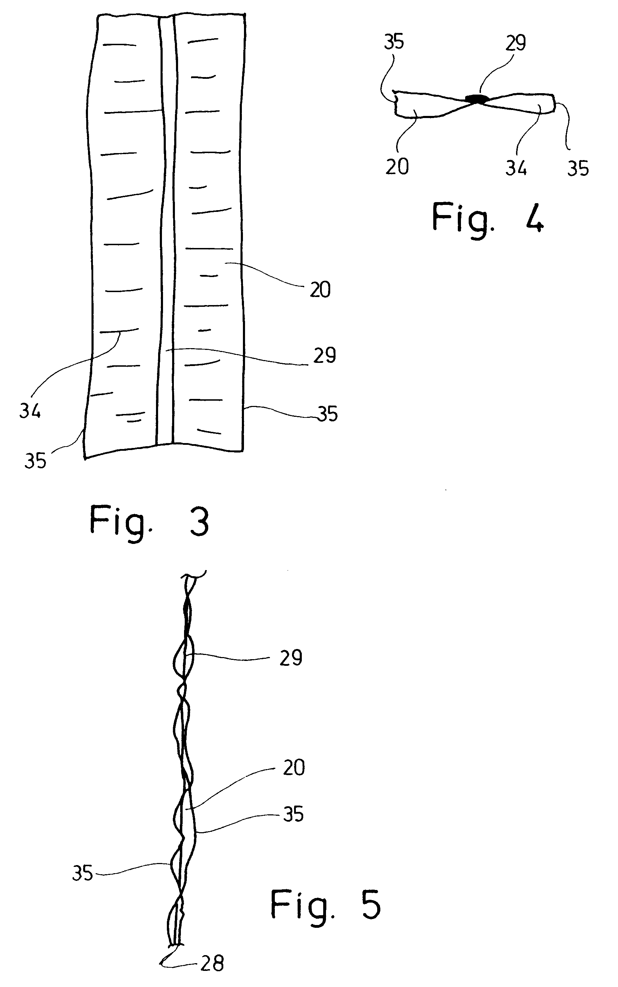

Im vorliegenden Ausführungsbeispiel ist, wie den Fig. 1 bis 5 entnommen werden kann, jedem Streifen 20 ein Zugorgan, nämlich ein Strang 29, zugeordnet. Wie insbesondere der Fig. 2 entnommen werden kann, verläuft jeweils ein gerader Strang vom freien Ende 28 eines an einer Seite der Haltebahn 11 sich befindenden Streifens 20 zum (gegenüberliegenden) freien Ende 28 eines sich an der anderen Seite der Haltebahn 21 befindenden Streifens. Somit verbindet jeweils ein Strang 29 zwei gegenüberliegende Streifen 20, indem er ununterbrochen quer über die Haltebahn 21 hinwegläuft. Die Anordnung der Stränge 29 ist derart getroffen, daß diese sich auf einer Seite in der Mitte der Streifen befinden. Dies kann deutlich der Fig. 4 entnommen werden. Wie wiederum die Fig. 2 erkennen läßt, verfügt jede der Lagen 22 bzw. 23 über so viele parallel verlaufende Stränge 29 wie diese nebeneinanderliegenden Streifen 20 aufweist.

Wie weiter der Fig. 2 aber auch der Fig. 1 entnommen werden kann, sind zu der Haltebahn 21 hingerichtete (End-)Bereiche der Streifen 20 mit Einschnitten 30 versehen. Diese sind etwa rechteckförmig ausgebildet und liegen jeweils zwischen zwei benachbarten Streifen 20, wodurch in den Bereichen der Einschnitte 30 die Streifen 20 über eine reduzierte Breite verfügen, ohne jedoch die Stränge 29 zu unterbrechen. Die Einschnitte 30 dienen dazu, daß im auf einen Tragbalken 31 eines Traggerüstes 32 aufgehängten Zustand die von oben auf den Tropfkörper aufgerieselte Flüssigkeit zu den Streifen 20 der mittleren Lage 23 bzw. der zum Tragbalken 31 gerichteten äußeren Lage 22 gelangen kann, also eine gleichmäßige Benetzung der Streifen 20 sämtlicher Lagen 22 bzw. 23 gewährleistet ist.

Wie auch aus der Fig. 1 erkennbar, sind die unterschiedlichen Lagen 22 bzw. 23 im mittleren Bereich ihrer Haltebahnen 21 miteinander verbunden durch eine in Längsrichtung der Haltebahn 21 bzw. quer zu den Streifen verlaufenden Schweißnaht 33.

Aus den Fig. 3 bis 5 wird erkennbar, daß gegenüber dem Strang 29, der annähernd geradlinig verläuft, der Streifen 20 gekräuselt ist, und zwar derart, daß er über quer zur Längsrichtung verlaufende Falten 34 verfügt. Die parallelen Ränder 35 des Streifens 20 weisen daher einen besonders deutlich in der Fig. 5 erkennbaren gewellten Verlauf auf. Dieser nimmt ausgehend von den Rändern 35 zu dem (mittigen) Strang 29 hin allmählich ab. Durch diese Ausbildung erhält der Streifen 20 eine dreidimensionale Struktur, die eine optimale Fläche für den darauf zur biologischen Abwasserbehandlung anzusiedelnden "biologischen Rasen" ist.

Der Strang 29 verfügt im gezeigten Ausführungsbeispiel über einen etwa kreisförmigen Querschnitt, dessen Durchmesser erheblich größer als die Dicke des Materials für den Streifen ist. Als Material für den Strang 29 kommt ein thermoplastischer Kunststoff mit geringer Dehnung, beispielsweise Polypropylen oder Polyethylen, in Betracht. Dadurch behält der Streifen - gestützt vom Strang 29 - seine Länge im belasteten Zustand, also mit auf der Oberfläche des Streifens 20 angesiedeltem "biologischen Rasen" in etwa bei, zur Verhinderung der Glättung des Streifens 20, insbesondere seiner wellenförmig verlaufenden Ränder 35.

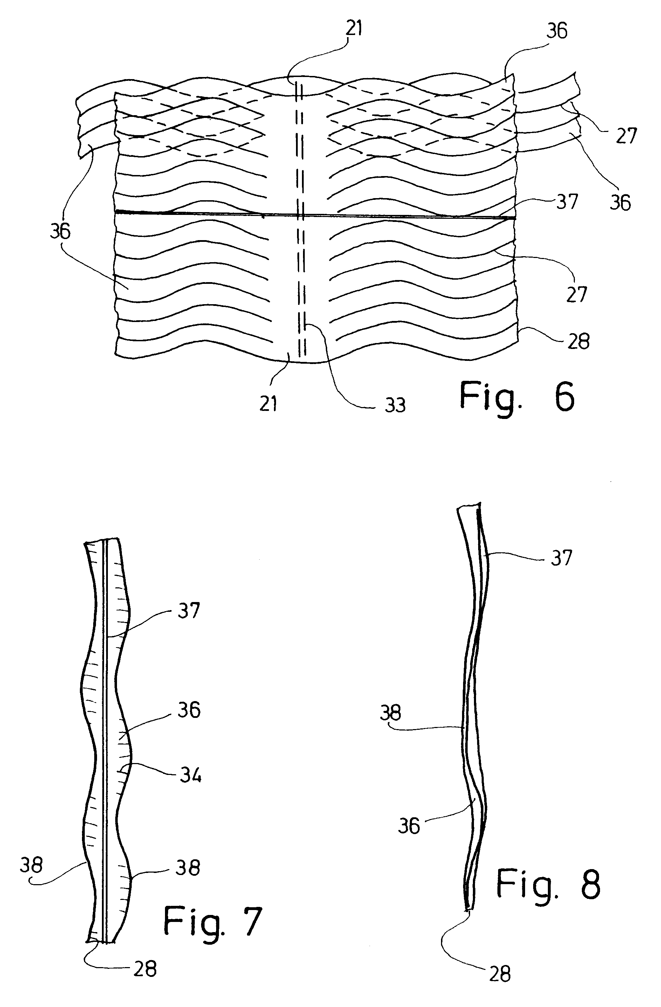

Gegenüber dem in den Fig. 1 bis 5 beschriebenen Füllmaterial verfügt das in den Fig. 6 bis 8 gezeigte Füllmaterial über im Grundriß gesehen schlangen-, nämlich sinusförmig, verlaufende Streifen 36. Diese können, wie in den Fig. 6 bis 8 gezeigt, auch auf einer Seite mit einem hier geradlinig verlaufenden Strang 37 versehen sein. Dazu verläuft im vorliegenden Ausführungsbeispiel der Streifen 36 abwechselnd zur einen und zur anderen Seite des (geradlinigen) Stranges 37, so daß ein durchgehender Kontakt des Streifens 36 mit dem Strang 37 gewährleistet ist. Alternativ ist es auch denkbar, den Strang der Schlagenlinie des Streifens folgenzulassen, wodurch dann auch der Strang einen geschlängelten Verlauf aufweist.

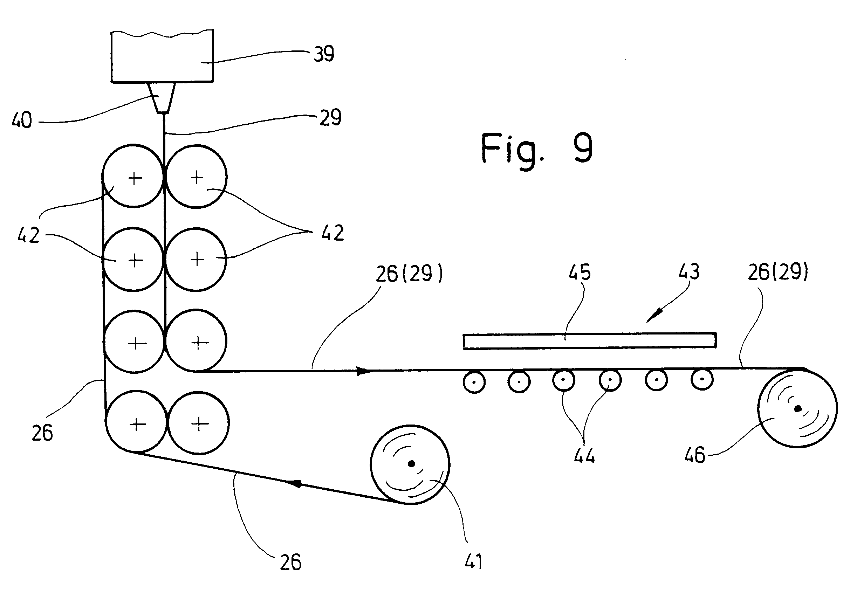

Wie der Fig. 8 zu entnehmen ist, sind beim gezeigten Ausführungsbeispiel die parallel verlaufend, geschlängelten Ränder 38 des Streifens 36 gekräuselt, so daß auch diese einen gewellten Verlauf aufweisen. Ein solcher Streifen 36 verfügt über eine große räumliche Ausdehnung, die besonders große Bewuchsflächen für den "biologischen Rasen" schafft.

Eine Vorrichtung zur Herstellung der Stränge 29 in Verbindung derselben mit einer zur Bildung der Streifen 20 dienenden (Material-)Bahn 26 zeigt die Fig. 9. Bei der gezeigten Vorrichtung werden mehrere mit Abstand nebeneinanderliegende Stränge 29 von einem Extruder 39 hergestellt. Die aus einem Mundstück 40 des Extruder 39 austretenden Stränge 29 werden noch im heißen Zustand, also unmittelbar auf das Mundstück 40 folgend, mit der kalten (Material-)Bahn 26 zusammengeführt und verschweißt bzw. versiegelt. Dazu wird die (Material-)Bahn 26 von einer Vorratsrolle 41 abgezogen und zwischen entsprechende Walzenpaare, nämlich im vorliegenden Ausführungsbeispiel drei Walzenpaare 42, geführt, zwischen denen auch die aus dem Mundstück 40 des Extruders 39 austretenden und noch heißen Stränge 29 hindurchlaufen. Dadurch erfolgt beim Hindurchführen der Stränge 29 und der (Material-)Bahn 26 durch die Walzenpaare 42 eine Verschweißung der Stränge 29 mit der (Material-)Bahn.

Im Anschluß an die Walzenpaare 42 wird die mit den Strängen 29 versehene (Material-) Bahn 26 durch eine Kühlstation 43 geführt. Diese Kühlstation 43 verfügt über eine Mehrzahl an der Unterseite der (Material-)Bahn 26 anliegende Stützrollen 44 und eine der gegenüberliegenden Oberseite der (Material-)Bahn 26, auf der sich die Stränge 29 befinden, zugeordneten Kühleinrichtung 45. Beim in der Kühlstation 43 erfolgenden Abkühlung der Stränge 29 schwinden diese. Dabei wird die kalte, also nicht schwindende (Material-)Bahn 26 zusammengezogen, wodurch sie ihre besonders an den Rändern 35 auftretende Kräuselung erhält.

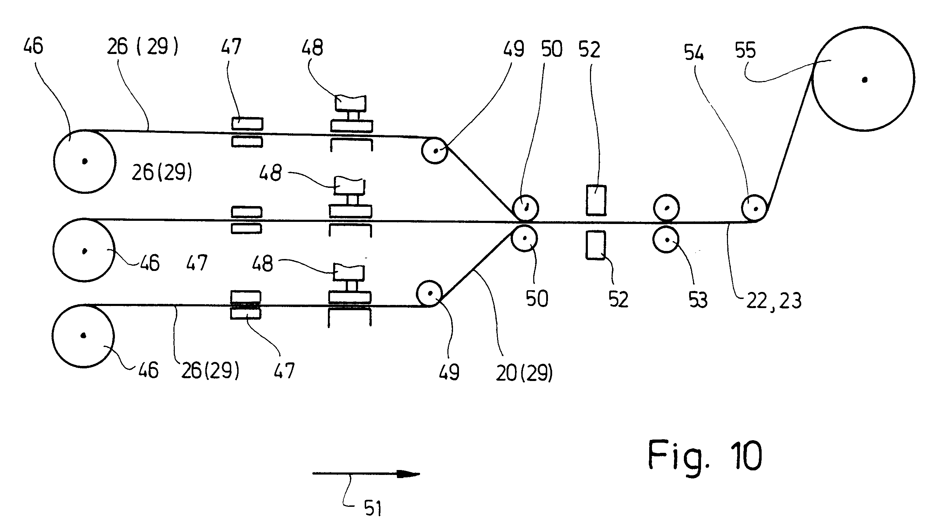

Im Anschluß an die Kühlstation 43 wird die so mit den Strängen 29 versehene, gekräuselte (Material-)Bahn 26 auf einer Zwischenlagerrolle 46 aufgewickelt. Die so vorbereitete (Material-)Bahn 26 kann dann auf der in der Fig. 10 gezeigten Vorrichtung zur Bildung des endgültigen Füllmaterials weiterbearbeitet werden.

Im Ausführungsbeispiel der Fig. 10 erfolgt die Weiterbehandlung der mit den Strängen 29 versehenen (Material-)Bahn 26 zunächst in drei Ebenen. Dazu wird von drei übereinander angeordneten Zwischenlagerrollen 46 gleichzeitig die mit den Strängen 29 versehene (Material-)Bahn 26 abgezogen. Hierbei erfolgt zunächst an jeder (Material-)Bahn 26 ein Schneiden der Streifen 20, indem jede (Material-)Bahn 26 an einer Messereinheit 47 vorbeibewegt wird zur Bildung der (geradlinigen) Einschnitte 30 zwischen benachbarten Streifen 20. Die Messereinheiten 47 sind durch eine nicht gezeigte Hubeinrichtung von Zeit zu Zeit anhebbar, so daß sie außer Eingriff mit der (Material-)Bahn 26 gelangen zur Bildung jeweils (ungeschnittener) Haltebah-

4

nen 20.

Im Anschluß an die Messereinheit 47 für jede (Material-)Bahn 26 weist die Vorrichtung entsprechende Stanzeinrichtungen 48 auf. Diese stanzen die Einschnitte 30 zwischen benachbarten Streifen 20. Zur Gewährleistung einer kontinuierlichen Fertigung können die Stanzstationen 48 "fliegend" ausgebildet sein.

Hinter den Stanzstationen 48 erfolgt eine Zusammenführung aller drei mit Einschnitten 27 und 30 versehenen (Material-)Bahnen 26, indem die beiden äußeren Lagen 22 über Umlenkrollen 49 zur mittleren, inneren Lage 23 geführt werden zwischen einem Walzenpaar 50 hindurch. In Fertigungsrichtung (Pfeil 51) gesehen, folgt auf das Walzenpaar 50 eine Schweißeinrichtung 52. Diese dient zur Verbindung der Lagen 22 bzw. 23 im Bereich ihrer Haltebahnen 21, nämlich zur Bildung der Schweißnaht 33. Demzufolge wird die Schweißeinrichtung 52 periodisch aktiviert, und zwar einmal dann, wenn sich drei übereinanderliegende Haltebahnen 21 der Lagen 22 bzw. 23 im Bereich der Schweißeinrichtung 52 befinden.

Auf die Schweißeinrichtung 52 folgen in Fertigungsrichtung gesehen ein letztes Walzenpaar 53 und eine Umlenkrolle, von der aus das Füllmaterial mit hintereinanderhängenden Einheiten auf einer Vorratsrolle 55 aufgewickelt wird. Von dieser sind einzelne Füllmaterial-Einheiten zur Montage des Tropfkörpers nacheinander abzieh- und auf entsprechende Tragbalken 31 des Traggerüstes 32 auflegbar.

Wenigstens eines der Walzenpaare 50 bzw. 53 der Vorrichtung ist drehend antreibbar zum Hindurchziehen der fertig zu bearbeitenden (Material-)Bahn 26 durch die Messereinheit, die Stanzeinheit und die Schweißeinrichtung.

Alternativ ist es denkbar, den in der Fig. 10 gezeigten Vorrichtungsteil unmittelbar auf den ersten Vorrichtungs-Abschnitt der Fig. 9 folgen zu lassen. Es entfällt dann also das Aufwickeln der mit den Strängen 29 versehenen (Material-)Bahn 26 auf der Zwischenlagerrolle 46. Diese Alternative eignet sich besonders zur Herstellung des Füllmaterial5 aus einer einlagigen (Material-)Bahn 26. Aber auch ein mehrlagiges Füllmaterial läßt sich hintereinander komplett herstellen, wenn nämlich die einzelnen Lagen 22 bzw. 23 gleichzeitig auf mehreren Extrudern 39 usw. hergestellt werden.

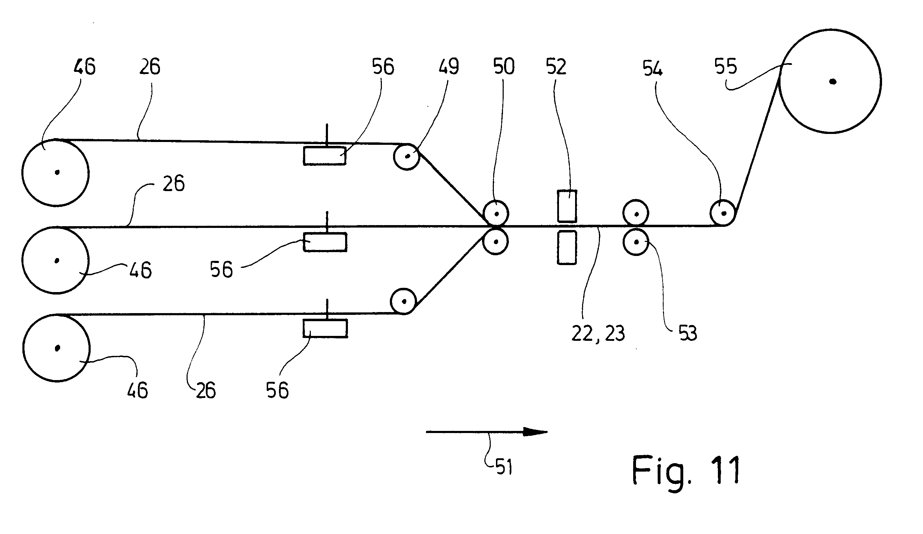

Schließlich zeigt die Fig. 11 eine Alternative der in der Fig. 10 gezeigten Vorrichtung. Diese eignet sich besonders zur Herstellung Schlangenförmiger Streifen 36 gemäß den Fig. 6 bis 8. Die Wellen der schlangenförmigen Streifen 36 werden hier durch eine mit einem Thermoschneidstift, Schneidmesser, Schneidwalze od. dgl. versehenen Schneideinrichtung 56 gebildet, die während der kontinuierlichen Fortbewegung der (Material-)Bahn 26 in Fertigungsrichtung 51 quer hierzu regelmäßig hin- und herbewegt wird. Diese orthogonale Richtungsüberlagerung dient zur einfachen Bildung paralleler, wellenförmiger Ränder 38 der Streifen 36.

## Patentansprüche

1. Füllmaterial aus Kunststoff zur Behandlung von Flüssigkeiten, insbesondere zur biologischen Abwasserbehandlung, mit einer Vielzahl von Streifen (20, 36) aus Kunststoff, **dadurch gekennzeichnet**, daß auf den Streifen (20, 36) wenigstens ein zugaufnehmender Strang (29, 37) angeordnet ist.

2. Füllmaterial nach Anspruch 1, dadurch gekennzeichnet, daß auf den Streifen (20, 36) jeweils ein in Längsrichtung desselben verlaufender zugaufnehmender Strang (29, 37) angeordnet ist.

3. Füllmaterial nach Anspruch 1 oder 2, dadurch gekennzeichnet, daß auf einer Seite jedes mit geraden parallelen Rändern (35) versehenen Streifens (20) ein einziger Strang (29) etwa mittig angeordnet ist.

4. Füllmaterial nach Anspruch 1 oder 2, dadurch gekennzeichnet, daß auf einer Seite jedes mit gleichermaßen wellenförmig parallel verlaufenden Rändern (38) versehenen Streifens (36) ein einziger, etwa gerader Strang (37) angeordnet ist, derart, daß der Strang geradlinig über die gesamte Länge der Streifen (36) zwischen dessen wellenförmigen Rändern (38) verläuft.

5. Füllmaterial nach Anspruch 1 oder 2, dadurch gekennzeichnet, daß der zugaufnehmende Strang (37) mit den Streifen (36) derart fest verbunden ist, daß bei geradlinig verlaufendem Strang (37) die ihm zugeordneten Streifen (36) gekräuselt sind.

6. Füllmaterial nach einem oder mehreren der Ansprüche 1 bis 5, dadurch gekennzeichnet, daß der zugaufnehmende Strang (29, 37) mit den Streifen (20, 36) fest verbunden ist.

7. Füllmaterial nach einem oder mehreren der Ansprüche 1 bis 6, dadurch gekennzeichnet, daß die Stränge (29, 37) über einen etwa runden Querschnitt verfügen, wobei der Durchmesser der Stränge (29, 37) um ein Mehrfaches größer ist als die Dicke der Streifen (20, 36).

8. Füllmaterial nach Anspruch 7, dadurch gekennzeichnet, daß die Stränge (29, 37) aus einem thermoplastischen Kunststoff mit geringer Dehnung, beispielsweise Polypropylen oder Polyäthylen, bestehen.

9. Verfahren zur Herstellung von zur biologischen Abwasserbehandlung dienendem Füllmaterial aus einer Mehrzahl von Streifen aus Kunststoff nach Anspruch 1, dadurch gekennzeichnet, daß mehrere kontinuierlich unter Hitzeeinwirkung hergestllte (extrudierte) Stränge (29, 37) im mindestens warmen Zustand auf eine (Material-)Bahn (26) kontinuierlich aufgebracht werden, und die (Material-)Bahn (26) zwischen benachbarten Strängen (29, 37) fortlaufend durchtrennt wird zur Bildung nebeneinanderliegender Streifen (20, 36).

10. Verfahren nach Anspruch 9, dadurch gekennzeichnet, daß eine Mehrzahl heißer Stränge (29, 37) unter Druckeinwirkung auf die kalte (Material-)Bahn (26) aufgesiegelt bzw. aufgeschweißt werden.

11. Verfahren nach Anspruch 9 oder 10, dadurch gekennzeichnet, daß nach dem Aufsiegeln bzw. Aufschweißen der Stränge (29, 37) auf die (Material-)Bahn (26) letztere mit den Strängen (29, 37) durch eine Kühleinrichtung (45) geleitet wird, in der durch die Schrumpfung der abgekühlten Stränge (29, 37) eine Kräuselung der (Material-)Bahn (26) erfolgt.

12. Verfahren nach Anspruch 9 oder 10, dadurch gekennzeichnet, daß nach dem Abkühlen der Stränge (29, 37) die (Material-)Bahn (26) jeweils zwischen den benachbarten Strängen (29, 37) fortlaufend durchtrennt wird, und daß das Schneiden der Streifen (20, 36) aus der (Material-)Bahn (26) in regelmäßigen Zeitabständen ausgesetzt wird zur Bildung von die nebeneinanderliegenden Streifen (20, 36) verbindenden Haltebahnen (21).

13. Verfahren nach Anspruch 12, dadurch gekennzeichnet, daß nach dem Abkühlen der Stränge (29, 37) die mit denselben versehene (Material-)Bahn (26) auf eine Zwischenlagerrolle (46) aufgewickelt und dann von mehreren solcher Zwischenlagerrollen (46) gleichzeitig entsprechende (Material-)Bahnen (26) abgezogen, geschnitten und anschließend an den Haltebahnen (21) verbunden werden.

**Claims**

1. Plastic contact material for the treatment of liquids, especially for biological sewage treatment, with a plurality of plastic strips (20, 36), characterised in that at least one tension absorbing strand (29,37) is arranged on the strips (20, 36).

2. Contact material according to Claim 1, characterised in that in each case a tension-absorbing strand (29,37) extending in the longitudinal direction of the strips (20,36) is arranged on said strips.

3. Contact material according to Claim 1 or 2, characterised in that a single strand (29) is arranged approximately centrally on one side of each strip (20) having straight parallel edges (35).

4. Contact material according to Claim 1 or 2, characterised in that a single approximately straight strand (37) is arranged on one side of each strip (36) having identically wavy parallel edges (38), in such a way that the strand extends in a straight line over the entire length of the strips (36) between the wavy edges (38) of the latter.

5. Contact material according to Claim 1, characterised in that the tension-absorbing strand (37) is firmly connected to the strips (36) in such a way that, when the strand (37) extends in a straight line, the strips (36) assigned to it are crimped.

6. Contact material according to one or more of Claims 1 to 5, characterised in that the tension-absorbing strand (29, 37) is connected firmly to the strips (20, 36).

7. Contact material according to one or more of Claims 1 to 6, characterised in that the strands (29,37) have an approximately round cross-section, the diameter of the strands (29,37) being larger by a multiple than the thickness of the strips (20,36).

8. Contact material according to Claim 7, characterised in that the strands (29,37) consist of a thermoplastic of low extension, for example polypropylene or polyethylene.

9. Process for producing contact material serving for biological sewage treatment from a plurality of plastic strips according to Claim 1, characterised in that a plurality of (extruded) strands (29, 37) produced continuously under the effect of heat are continuously applied in at least a warm state to a (material) web (26), and the (material) web (26) is severed continuously between adjacent strands (29, 37) to form strips (20, 36) lying next to one another.

10. Process according to Claim 9, characterised in that a plurality of hot strands (29, 37) are sealed or welded on to the cold (material ) web (26) under the effect of pressure.

11. Process according to Claim 9 or 10, characterised in that, after the strands (29,37) have been sealed or welded on to the (material) web (26), the latter is guided, together with the strands (29,37), through a cooling device (45) in which a crimping of the (material) web (26) takes place as a result of the shrinkage of the cooled strands (29,37).

12. Process according to Claim 9 or 10, characterised in that, after the cooling of the strands (29, 37), the (material) web (26) is continuously severed respectively between the adjacent strands (29, 37), and in that the cutting of the strips (20, 36) from the (material) web (26) is interrupted at regular time intervals in order to form holding webs (21) connecting the strips (20, 36) lying next to one another.

13. Process according to Claim 12, characterised in that, after the cooling of the strands (29,37), the (material) web (26) provided with these is wound onto an intermediate storage reel (46), and then appropriate (material) webs (26) are simultaneously drawn off from several such intermediate storage reels (46), cut and subsequently connected to the holding webs (21).

## Revendications

1. Matière de remplissage à base de substance synthétique, pour le traitement de liquides, en particulier pour le traitement biologique des eaux résiduaires, comprenant un grand nombre de rubans (20, 36) en substance synthétique, caractérisée en ce qu'au moins un cordon (29, 37) réducteur de tension est agencé sur les rubans (20, 36).

2. Matière de remplissage suivant la revendication 1, caractérisée en ce qu'un cordon (29, 37) réducteur de tension, qui s'étend dans la direction longitudinale des rubans, est agencé sur chacun des rubans (20, 36).

3. Matière de remplissage suivant l'une des revendications 1 et 2, caractérisée en ce qu'un cordon unique (29) est disposé approximativement centralement sur une face de chaque ruban (20) pourvu de bords parallèles droits (35).

4. Matière de remplissage suivant l'une des revendications 1 et 2, caractérisée en ce qu'un cordon (37) unique, approximativement rectiligne, est agencé sur une face de chaque ruban (36) pourvu de bords (38) qui s'étendent parallèlement de manière uniformément ondulée, de telle façon que le cordon s'étende de manière rectiligne sur toute la longueur du ruban (36) entre les bords ondulés (38) de celui-ci.

5. Matière de remplissage suivant l'une des revendications 1 et 2, caractérisée en ce que le cordon (37) réducteur de tension est relié de manière fixe aux rubans (36) de telle façon que les rubans (36) qui lui sont adjoints soient crêpés pour un cordon (37) qui s'étend de manière rectiligne.

6. Matière de remplissage suivant une ou plusieurs des revendications 1 à 5, caractérisée en ce que le cordon réducteur de tension (29, 37) est relié de manière fixe aux rubans (20, 36).

7. Matière de remplissage suivant une ou plusieurs des revendications 1 à 6, caractérisée en ce que les cordons (29, 37) disposent d'une section transversale approximativement circulaire, le diamètre des cordons (29, 37) étant plusieurs fois plus grands que l'épaisseur des rubans (20, 36).

8. Matière de remplissage suivant la revendication 7, caractérisée en ce que les cordons (29, 37) sont constitués d'une substance synthétique thermoplastique à faible allongement, par exemple du polypropylène ou du polyéthylène.

9. Procédé de préparation d'une matière de remplissage servant au traitement biologique des eaux résiduaires et constituée d'un grand nombre de rubans en substance synthétique, suivant la revendication 1, caractérisé en ce que plusieurs cordons (29, 37) fabriqués de manière continue par une action de chaleur (extrudés) sont appliqués de manière continue, à l'état au moins chaud, sur une bande (de matière) (26) et en ce que la bande (de matière) (26) est divisée de manière continue entre les cordons voisins (29, 37) en vue de former des rubans (20, 36) situés les uns à côté des autres.

10. Procédé suivant la revendication 9, caractérisé en ce qu'un grand nombre de cordons chauds (29, 37) sont scellés ou soudés par l'action d'une pression sur la bande (de matière) (26) froide.

11. Procédé suivant l'une des revendications 9 et 10, caractérisé en ce que, après le scellage ou le soudage des cordons (29, 37) sur la bande (de matière) (26), cette dernière est conduite avec les cordons (29, 37) à travers un dispositif de refroidissement (45) dans lequel un crêpage de la bande (de matière) (26) a lieu par le rétrécissement des cordons refroidis (29, 37).

12. Procédé suivant l'une des revendications 9 et 10, caractérisé en ce que, après le refroidissement des cordons (29, 37), la bande (de matière) (26) est divisée de manière continue chaque fois entre les cordons voisins (29, 37) et en ce que la coupe des rubans (20, 36) dans la bande (de matière) (26) est interrompue à des intervalles de temps réguliers pour former des bandes de retenue (21) reliant les rubans (20, 36) situés les uns à côté des autres.

13. Procédé suivant la revendication 12, caractérisé en ce que, après le refroidissement des cordons (29, 37), la bande (de matière) (26) pourvue de ces derniers est enroulée sur un rouleau intermédiaire (46) et en ce qu'ensuite des bandes (de matière) (26) correspondantes sont simultanément soutirées de plusieurs rouleaux intermédiaires de ce genre (46), découpées et ensuite reliées sur les bandes de retenue (21).

Fig. 1

Fig. 2

35    29

20    34    35

## Fig. 4

20

34

29

35

35

## Fig. 3

29

20

35

35

## Fig. 5

28

Fig. 6

Fig. 7

Fig. 8

Fig. 9

Fig. 10

EP 0 332 907 B1

Fig. 11

EP 0 332 907 B1